# EUROPEAN PATENT APPLICATION

(11) **EP 4 674 922 A2**
(43) Date of publication of application: **07.01.2026**
(21) Application number: 25218291.0
(22) Date of filing: 08.03.2022
(51) Int. Cl.: C09K 5/04

(54) **COMPOSITIONS COMPRISING 2,3,3,3-TETRAFLUOROPROPENE AND OXIDATION PRODUCTS**

(30) Priority: 08.03.2021 US 202163158103 P
(62) Divisional of application: 22712738.8
(71) Applicant: The Chemours Company FC, LLC, Wilmington, Delaware 19801 (US)
(72) Inventor: Peng, Sheng, Hockessin, 19707 (US); Sun-Blanks, Jian, Earleville, 21909 (US)
(74) Representative: Abitz & Partner

(57) **Abstract**

Disclosed are compositions comprising HFO-1234yf, an inhibitor and oxidation products derived from the inhibitor. Such compositions are useful, among other uses, as heat transfer compositions for use in refrigeration, air-conditioning and heat pump systems.

## Description

### CROSS REFERENCE TO RELATED APPLICATIONS

This application claims the benefit of priority of U.S. Provisional Application No. 63/158,103 filed March 8, 2021, the disclosures of which are incorporated herein by reference in its entirety.

### FIELD

The present invention relates to compositions comprising 2,3,3,3-tetrafluoropropene and an inhibitor.

### BACKGROUND

New environmental regulations on refrigerants have forced the refrigeration and air-conditioning industry to look for new refrigerants with low global warming potential (GWP).

Replacement refrigerants are being sought that have low GWP, low toxicity, low or non-flammability, reasonable cost and excellent refrigeration performance. Fluoroolefins provide satisfy these criteria. In addition, desired properties in a refrigerant include ease of detecting leaks, performance including efficiency and capacity refrigerant applications, solubility in lubricants used in such applications and compatibility with components used in such applications.

2,3,3,3-Tetrafluoropropene (HFO-1234yf, R-1234yf, or 1234yf) is an example of a fluoroolefin having a low Global Warming Potential (GWP) and is an alternative to high GWP hydrofluorocarbons and/or ozone-depleting hydrochlorofluorocarbons in numerous applications such as refrigeration, air-conditioning, heating and cooling, power cycles. Improvement in properties of compositions comprising 1234yf is desired.

### Description of Related Art

1234yf is a stable molecule when used in heat transfer applications such as refrigeration and air-conditioning. However, 1234yf may oligomerize or homopolymerize in the presence of radical initiators, such as air, which may be inadvertently introduced.

WO2019/213004 discloses compositions comprising fluoroolefins and certain inhibitors to increase stability thereof during packaging, storage and usage in refrigeration or air-conditioning systems. Terpenes, for example limonene, α-terpinene, and α-pinene, are disclosed as being effective to prevent polymerization reactions as determined by visual inspection of 1234yf samples treated with the recited terpenes.

### SUMMARY

The present disclosure provides a composition comprising 2,3,3,3-tetrafluoropropene, a terpene inhibitor and one or more oxidation products, wherein the oxidation product is an oxidation product of a terpene inhibitor. The terpene inhibitor may be chosen from one or more of limonene, α-terpinene, α-pinene and β-pinene.

The oxidation product may be an oxidation product of limonene, chosen from at least one of carvone, carveol (Z- and E-) and limonene oxide (Z- and E-) as illustrated below.

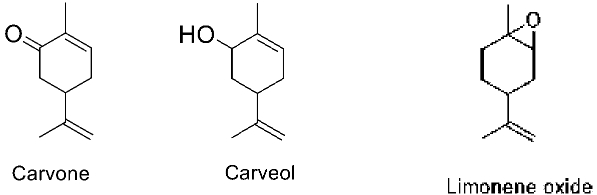

When the inhibitor comprises limonene, the composition may further comprise one or more of the following: α-terpene, cymene, 1-octanol, γ-terpinene, terpinolene, and β-terpinene.

The oxidation product may be an oxidation product of α-terpinene, chosen from at least one of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, E-3-isopropyl-6-methylhepta-2,6-dienal, p-cymene, and propane, all except propane as illustrated below.

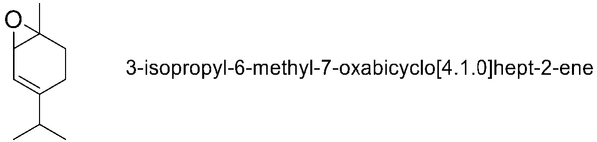

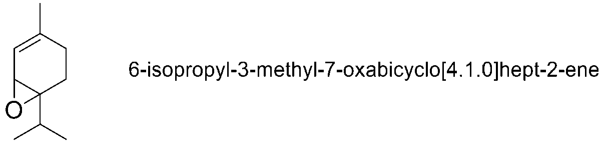

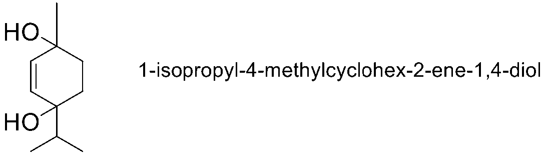

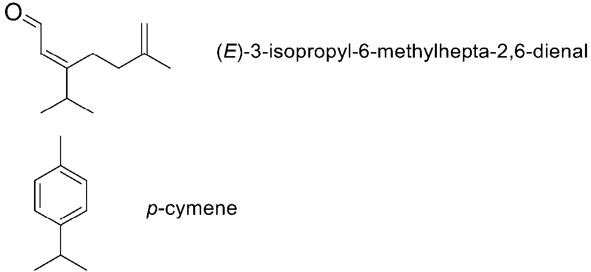

When the inhibitor comprises α-terpinene, the composition may further comprise one or more of the following: camphene, isocamphene, terpinolene, menthomenthene, phellandrene, sabinene, β-terpinene, 1,4-cineole, carvomenthene oxide, d-limonene, 1,8-cineol, γ-terpinene.

The oxidation product may be an oxidation product of α-pinene, wherein the oxidation product is α-pinene oxide, as illustrated below.

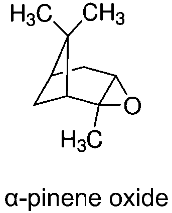

When the inhibitor comprises α-pinene, the composition may further comprise one or more of the following: 5-methyl-4-nonene, α-thujene, tricyclene (1,7,7-trimethyltricyclo[2.2.1.02,6]heptane), α-fenchene, camphene, cymene, d-limonene, α-campholenal.

The oxidation product may be an oxidation product of β-pinene, chosen from at least one of pinocarveol and myrtenol, as illustrated below.

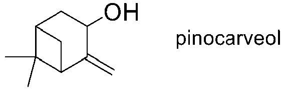

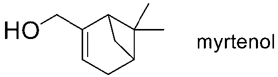

When the inhibitor comprises β -pinene, the composition may further comprise one or more of the following: α-pinene, α-fenchene, camphene, verbenene, myrcene, phellandrene, camphane, cymene and 2-menthene.

The oxidation product may comprise an oxidation product of more than one terpene inhibitor.

The composition may further comprise an additional compound chosen from at least one of HCC-40, CFC-12, HFC-23, HFC-134a, HFC-143a, HFC-152a, , HCFC-225ca, HCFC-225cb, HCFC-244bb, HFC-245cb, HFC-254eb, HFC-263fb, HFO-1123, HFO-1243zf, HFO-1225ye (E- and/or Z-isomer), HFO-1225zc, HFO-1234ze (E- and/or Z-isomer), 3,3,3-trifluoro-1-propyne, HCFO-1233xf, HCFO-1122, HCO-1140, HCFO-1131 (E- and/or Z-isomer), HCFO-1131a, HCFC-124, HCFC-124a, and HCFC-142b.

The composition may further comprise an additional compound chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid.

The composition may further comprise an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.

The additional compounds are available from commercial suppliers or may be prepared by known methods. The additional compounds may be added in a desired amount. Alternatively, certain of the additional compounds may be co-produced in the methods to produce the composition comprising 2,3,3,3-tetrafluoropropene, and one or more oligomers. If so, the total amount of the one or more additional compound may be desirably controlled by purification methods.

The compositions disclosed herein may be useful as heat transfer compositions, aerosol propellants, foaming agents, blowing agents, solvents, cleaning agents, carrier fluids, displacement drying agents, buffing abrasion agents, polymerization media, expansion agents for polyolefins and polyurethane, gaseous dielectrics, extinguishing agents, and fire suppression agents in liquid or gaseous form.

In particular, the compositions disclosed herein are useful in applications as heat transfer compositions. Such applications include use as a refrigerant composition. A refrigerant composition may further comprise a lubricant such as polyol ester (POE), polyalkylene glycol (PAG), polyvinyl ether (PVE) and synthetic hydrocarbon oils. The compositions disclosed herein may improve performance of heat transfer compositions with lubricant in such applications.

Surprisingly it has been found herein that adding an oxidation product of a terpene stabilizer enhances performance of the resulting composition as a refrigerant or heat transfer composition. The presence of the recited oxidation products improves solubility of 1234yf in the lubricant. In a particular example, p-cymene provides antioxidant properties to the disclosed compositions. Propane is a telogen that can terminate polymer chain propagation.

### DESCRIPTION

### COMPOSITIONS

### Tetrafluoropropene

The tetrafluoropropene component of the composition is 2,3,3,3-tetrafluoropropene (1234yf), which is commercially available, or can be manufactured by various known processes. A suitable source of 1234yf has a purity (concentration of 1234yf relative to other components) of at least 99.95 wt% or at least 99.9 wt% or at least 99.8 wt% or at least 99.5 wt% or at least 99 wt%.

### Inhibitor

The composition disclosed herein comprises a terpene inhibitor. Specific examples of inhibitor compounds may be chosen from limonene, α-terpinene, α-pinene and β-pinene.

Additional inhibitors may be present which may include one or more of α-tocopherol, butylated hydroxytoluene, 4-methoxyphenol, and benzene-1,4-diol. In one embodiment, the inhibitor comprises α-terpinene. In one embodiment, the inhibitor comprises limonene. In one embodiment, the inhibitor comprises α-pinene. In one embodiment, the inhibitor comprises β -pinene.

In one embodiment, the composition comprises limonene or α-terpinene optionally with an antioxidant having a unique fragrance even at a few ppm level. This pleasant odor can be utilized for leakage detection of the composition, for example, in heat transfer applications. This is especially beneficial for early refrigerant leakage detection in household air conditioner or mobile air conditioner as paraprofessional electronic leak detectors often are not available in either location.

While any suitable amount of terpene inhibitor may be employed, effective amounts of a terpene inhibitor comprise from 0.001 wt% to 10 wt%, 0.01 wt% to 5 wt%, 0.3 wt% to 4 wt%, 0.3 wt% to 1 wt% based on the total weight of the composition. In one embodiment, an effective amount comprises 10 to 2000 ppm or 10 to 1000 ppm or 10 to 500 ppm of at least one terpene inhibitor.

When an additional inhibitor is present, the total amount of inhibitor (including terpene inhibitor and additional inhibitor) may also range from 0.001 wt% to 10 wt%, 0.01 wt% to 5 wt%, 0.3 wt% to 4 wt%, 0.3 wt% to 1 wt% based on the total weight of the composition.

### Oxidation Product

The composition disclosed herein comprises one or more oxidation products of a terpene inhibitor. The oxidation product may be chosen from one or more of carvone, carveol, limonene oxide, 3-isopropyl-6-methyl-7-oxabicyclo[4.1.0]hept-2-ene, 6-isopropyl-3-methyl-7-oxabicyclo[4.1.0]hept-2-ene, 1-isopropyl-4-methyl-cyclohex-2-ene-1,4-diol, E-3-isopropyl-6-methylhepta-2,6-dienal, p-cymene, propane, α-pinene oxide, pinocarveol and myrtenol.

When the inhibitor is limonene, the oxidation product may be at least one of carvone, carveol, and limonene oxide, as illustrated above. In one embodiment, when the inhibitor is limonene, the oxidation product is limonene oxide. In one embodiment, when the inhibitor is limonene, the oxidation product is carvone. In one embodiment, when the inhibitor is limonene, the oxidation product is carveol. In one embodiment, when the inhibitor is limonene, the oxidation product is two or more of limonene oxide, carvone and carveol.

When the inhibitor is α-terpinene, the oxidation product may be at least one of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p-*cymene and propane, all except propane, as illustrated above. In one embodiment, when the inhibitor is α-terpinene, the oxidation product is 3-isopropyl-6-methyl-7-oxabicyclo[4.1.0]hept-2-ene. In one embodiment, when the inhibitor is α-terpinene, the oxidation product is 6-isopropyl-3-methyl-7oxabicyclo[4.1.0]hept-2-ene. In one embodiment, when the inhibitor is α-terpinene, the oxidation product is 1-isopropyl-4-methyl-cyclohex-2-ene-1,4-diol. In one embodiment, when the inhibitor is α-terpinene, the oxidation product comprises *E*-3-isopropyl-6-methylhepta-2,6-dienal. In one embodiment, when the inhibitor is α-terpinene, the oxidation product comprises *p*-cymene. In one embodiment, when the inhibitor is α-terpinene, the oxidation product comprises propane. In one embodiment, when the inhibitor is α-terpinene, the oxidation product comprises a combination of two or more of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p*-cymene, and propane.

When the inhibitor is α -pinene, the oxidation product comprises α -pinene oxide, as illustrated above.

When the inhibitor is β-pinene, the oxidation product comprises at least one of pinocarveol and myrtenol, as illustrated above. In one embodiment, when the inhibitor is β-pinene, the oxidation product comprises pinocarveol. In one embodiment, when the inhibitor β-pinene, the oxidation product comprises myrtenol. In one embodiment, when the inhibitor is β-pinene, the oxidation product comprises pinocarveol and myrtenol.

While any suitable amount of oxidation product may be employed, effective amounts of an oxidation product comprise from 0.0001 wt% to 10 wt%, 0.01 wt% to 5 wt%, 0.3 wt% to 4 wt%, 0.3 wt% to 1 wt% based on the total weight of the composition. In one embodiment, an effective amount comprises 10 to 2000 ppm or 10 to 1000 ppm or 10 to 500 ppm of at least one oxidation product.

When two or more oxidation products are present, the total amount of oxidation product may also range from 0.0001 wt% to 10 wt%, 0.01 wt% to 5 wt%, 0.3 wt% to 4 wt%, 0.3 wt% to 1 wt% based on the total weight of the composition.

### Additional Compounds

The composition may further comprise one or more additional compounds. The additional compound may provide improvement in refrigerant performance or some other benefit such as improving compatibility with additives, such as lubricants. An improvement in refrigerant performance may include higher capacity or better efficiency.

The additional compound may be chosen from HCC-40, CFC-12, HFC-23, HFC-134a, HFC-143a, HFC-152a, HCFC-225ca, HCFC-225cb, HCFC-244bb, HFC-245cb, HFC-254eb, HFC-263fb, HFO-1123, HFO-1243zf, HFO-1225ye (*E*- and/or *Z*-isomer), HFO-1225zc, HFO-1234ze (*E*- and/or *Z*-isomer), 3,3,3-trifluoro-1-propyne, HCFO-1233xf, HCFO-1122, HCO-1140, HCFO-1131 (*E*- and/or *Z*-isomer), HCFO-1131a, HCFC-124, HCFC-124a, and HCFC-142b. These and other additional compounds are recited in Table 1.

The additional compound may be chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid. Certain of these compounds are recited in Table 1.

The composition may further comprise an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc. These compounds are recited in Table 1.

**Table 1. Additional Compounds**

| **Compound** | **Chemical formula** | **Chemical name** |
|---|---|---|
| HFC-32 | CH₂F₂ | difluoromethane |
| HC-40 | CH₃Cl | chloromethane |
| CFC-12 | CCl₂F₂ | dichlorodifluoromethane |
| HFC-23 | CHF₃ | trifluoromethane |
| HCFC-124 | CHClFCF₃ | 1-chloro-1,2,2,2-tetrafluoroethane |
| HCFC-124a | CClF₂CHClF₂ | 1-chloro-1,1,2,2-tetrafluoroethane |
| HFC-125 | CF₃CHF₂ | pentafluoroethane |
| HFC-134a | CF₃CH₂F | 1,1,1,2-tetrafluoroethane |
| HCFC-142b | CClF₂CH₂ | 1-chloro-1,1-difluoroethane |
| HFC-143a | CF₃CH₃ | 1,1,1-trifluoroethane |
| HFC-152a | CHF₂CH₃ | 1,1-difluoroethane |
| HCFC-225ca | CF₃CF₂CHCl₂ | 3,3-dichloro-1,1,1,2,2-pentafluoropropane |
| HCFC-225cb | CF₂ClCF₂CHFCl | 1,3-dichloro-1,1,2,2,3-pentafluoropropane |
| HFC-227ea | CF₃CF₂CHF₂ | 1,1,1,2,2,3,3,3-heptafluoropropane |
| HFC-236fa | CF₃CH₂CF₃ | 1,1,1,3,3,3-hexafluoropropane |
| HFC-244bb | CF₃CFClCH₃ | 2-chloro-1,1,1,2-tetrafluoropropane |
| HFC-245cb | CF₃CF₂CH₃ | 1,1,1,2,2-pentafluoropropane |
| HFC-254eb | CF₃CHFCH₃ | 1,1,1,2-tetrafluoropropane |
| HFC-263fb | CF₃CH₂CH₃ | 1,1,1-trifluoropropane |
| CFO-1112 | CCl₂=CF₂ | 1,1-dichloro-2,2-difluoroethylene |
| HCFO-1122 | CF₂=CHCl | 2-chloro-1,1-difluoroethylene |
| HCFO-1122a | CFCl=CFH | 1-chloro-1,2-difluoroethene |
| HFO-1123 | CF₂=CHF | 1,1,2-trifluoroethylene |
| HCFO-1131 | CHCl=CHF | E- and/or Z-1-chloro-2-fluoroethylene |
| HCFO-1131a | CClF=CH₂ | 1-chloro-1-fluoroethylene |
| E-HFO-1132 | E-CHF=CHF | 1,2-difluoroethylene |
| Z-HFO-1132 | Z-CHF=CHF | 1,2-difluoroethylene |
| HFO-1132a | CH₂=CF₂ | vinylidene fluoride |
| HCO-1140 | CH₂=CHCl | vinyl chloride |
| HCFO-1224yd | E- and/or Z-CF₃CF=CHCl | 1-chloro-2,3,3,3-tetrafluoropropene |
| HFO-1243zf | CF₃CH=CH₂ | 3,3,3-trifluoropropene |
| HFO-1225ye | E- and/or Z-CF₃CF=CHF | E- or Z-1,2,3,3,3-pentafluoropropene |
| HFO-1225zc | CF₃CH=CF₂ | 1,1,3,3,3-pentafluoropropene |
| HFO-1234ze | E- and/or Z-CF₃CH=CHF | E- or Z-1,3,3,3-tetrafluoropropene |
| | CH≡CCF₃ | 3,3,3-trifluoro-1-propyne |
| HFO-1234zc | CHF₂CH=CF₂ | 1,1,3,3-tetrafluoro-1propene |
| HFO-1234ye | CHF=CFCHF₂ | 1,1,2,3-tetrafluoropropene |
| HFO-1234yc | CH₂FCF=CF₂ | 1,1,2,3-tetrafluoro-1-propene |
| HCFO-1233xf | CF₃CCl=CH₂ | 2-chloro-3,3,3-trifluoropropene |
| HCFO-1233zd | E- and/or Z-CF₃CH=CHCl | E- and/or Z-1-chloro-3,3,3-trifluoropropene |
| HFO-1327mz | CF₃CF=CHCF₃ | 1,1,1,2,4,4,4-heptafluoro-2-butene |
| HFO-1336mzz | E- and/or Z-CF₃CH=CH CF₃ | E- and/or Z-1,1,1,4,4,4-hexafluoro-2-butene |
| HFO-1558mefzy | CHF(CF₃)CH₂CH=CF(CF ₃) | 1,1,1,2,5,6,6,6-octafluoro-2-hexene |
| HFO-1558mezze | CHF(CF₃)CH=CHCHF(C F₃) | 1,1,1,2,5,6,6,6-octafluoro-3-hexene |
| HFO-187-12mefmyfzy | CF(CF₃)=CHCH₂CF(CF₃) CH₂CHF(CF₃) | 1,1,1,5,7,8,8,8-octafluoro-5-trifluoromethyl-2-octene |

It is desired that the additional compound maintains the composition's global warming potential (GWP) less than 1500 or less than 750 or less than 150. The additional compound may lower the GWP of the composition to less than 4, which is the GWP of 1234yf. For example, certain hydrofluoroolefins (HFOs) have a GWP of less than 4, such as HFO-1243zf, which has a GWP of less than 1.

In one embodiment of the present disclosure, the additional compound may be chosen from one or more of HFO-1243zf, HFC-134a, HCFO-1122, HFC-254eb, HCFC-124 and HFC-23. In one embodiment, the additional compound is a combination of HFO-1243zf, HFC-134a and HFC-143a. In one embodiment, the additional compound is a combination of HFO-1243zf, HFC-134a, HFC-143a, HCFO-1122 and HFC-254eb.

In one embodiment of the present disclosure, the additional compound may be chosen from one or more of HFC-152a, HFO-1234ze(E), HCFO-1131a, HCO-1140, CFC-12, HFC-244bb and HCFO-1233xf. In one embodiment, the additional compound is a combination of HFC-152a and HFO-1234ze(E). In one embodiment, the additional compound is a combination of HFC-152a, HFO-1234ze(E), HCFO-1131a, HCO-1140, HFC-244bb and HCFO-1233xf.

In one embodiment of the present disclosure, the additional compound may be chosen from one or more of HFO-1225ye(Z), HC-40, HFO-1123 and HFC-263fb. In one embodiment, the additional compound is chosen from a combination of HFO-1225ye(Z), HFO-1123 and HFC-263fb.

In one embodiment, the additional compound is a minor component of the composition. In such an embodiment, the amount of an additional compound may be greater than 0 wt% and less than 1 wt%. The total amount of additional compounds present may be greater than 0.1 ppm and less than 0.5 wt% of the total weight of the composition. The total amount of additional compounds present may be greater than 1 ppm and less than 0.1 wt% of the total weight of the composition. The total amount of additional compounds present may be greater than 10 ppm or greater than 100 ppm or greater than 1000 ppm. The total amount of additional compounds may be less than 1 wt% or less than 0.5 wt % or less than 0.1 wt%. In one embodiment, the total amount of additional compounds is less than 1 wt%, such that the amount of 1234yf is at least 99%, or the total amount of additional compounds is less than 0.5%, such that the amount of 1234yf is at least 99.5%.

### Anti-oxidant

One embodiment of the invention relates to a composition as disclosed herein further comprising at least one anti-oxidant. While any suitable oxidant can be employed, examples of suitable oxidants comprise at least one member selected from the group consisting of butylated hydroxytoluene, butylated hydroxyanisole, tertiary-butylhydroquinone, gallate, 2-phenyl-2-propanol, 1-(2,4,5-trihydroxyphenyl)-1-butanone, bisphenol methane derivatives, 2,2'-methylene bis (4-methyl-6-t-butyl phenol), among other phenolics, and combinations thereof.

### PREPARATION OF THE COMPOSITION

The present disclosure provides a composition comprising 1234yf, a terpene inhibitor and one or more oxidation products, wherein the oxidation product is an oxidation product of a terpene inhibitor and the terpene inhibitor may be chosen from one or more of limonene, α-terpinene, α-pinene and β-pinene.

The composition may be prepared by contacting a composition comprising 1234yf and a terpene inhibitor chosen from one or more of limonene, α-terpinene, α-pinene and β-pinene with a source of oxygen at a contact time and contact temperature. Optionally one or more of the additional compounds may be present during the contacting step. Examples of what may be used as an oxygen source to prepare the composition disclosed herein include oxygen-containing gases such as oxygen (100%) and air. Alternatively, the oxygen source may be a peroxygen compound such as fluoroolefin polyperoxide, peroxides, hydroperoxides, persulfates, percarbonates, perborates and hydropersulfates. An example of a hydroperoxide is cumene hydroperoxide. A readily available oxygen source is air.

In the preparation of the composition, the oxygen source has an oxygen (O₂) concentration of at least 0.01 % oxygen or at least 21 % oxygen or pure (100%) oxygen, by weight. The contact time is at least 3 days or at least 14 days. The contact temperature is in the range of -25 to 150°C. It will be appreciated by those skilled in the art that the oxygen concentration, contact time and contact temperature are interdependent. That is, as one of the oxygen concentration, contact time and/or temperature increases, the others will decrease.

Air is the preferred oxygen source for its availability and cost. The oxygen source may remain present in the composition after the composition has been prepared in an amount from greater than zero wt% up to 3000 ppm.

Similarly, the anti-oxidant may be present in the composition comprising 1234yf and optionally the one or more additional compounds prior to the above-recited contacting step. The anti-oxidant may be added following the above-recited contacting step.

Alternatively, the composition comprising 2,3,3,3-tetrafluoropropene, a terpene inhibitor and one or more oxidation products, wherein the oxidation product is an oxidation product of a terpene inhibitor, and optionally one or more additional refrigerant compounds and optionally an anti-oxidant, may be prepared by combining 1234yf with a terpene inhibitor chosen from one or more of limonene, α-terpinene, α-pinene and β-pinene and an oxidation product of the chosen terpene inhibitor, and optionally one or more additional compounds and optionally an anti-oxidant, as each of these, that is, 1234yf, terpene inhibitor and oxidation products, additional refrigerant compounds and anti-oxidant are known compounds that can be purchased commercially or prepared according to known methods.

### APPLICATIONS

The compositions disclosed herein have a variety of utilities including working fluids, which include blowing agents, aerosol propellants, sterilants or, heat transfer mediums (such as heat transfer fluids and refrigerants for use in refrigeration systems, refrigerators, air conditioning systems, heat pumps, chillers, and the like), among others. The compositions are particularly suited for use in mobile air conditioning and heating systems and as a component for making a refrigerant blend for use in stationary refrigeration, air-conditioning and heat pump systems.

A blowing agent is a volatile composition that expands a polymer matrix to form a cellular structure.

An aerosol propellant is a volatile composition of one or more components that exerts a pressure greater than one atmosphere to expel a material from a container.

A sterilant is a volatile biocidal fluid or blend containing a volatile biocidal fluid that destroys a biologically active material or the like.

### Heat Transfer Applications

A heat transfer fluid (also referred to herein as a heat transfer composition or heat transfer fluid composition) is a working fluid used to carry heat from a heat source to a heat sink.

The present disclosure further relates to a process for transfer of heat from a heat source to a heat sink wherein the compositions disclosed herein serve as heat transfer fluids. Said process for heat transfer comprises transporting a composition comprising 2,3,3,3-tetrafluoropropene, a terpene inhibitor and one or more oxidation products, wherein the oxidation product is an oxidation product of a terpene inhibitor from a heat source to a heat sink.

A heat source is defined as any space, location, object or body from which it is desirable to add, transfer, move or remove heat. In one embodiment a heat source is a body to be cooled. In one embodiment, a heat source is a body to be heated.

In some embodiments, the heat transfer composition may remain in a constant state throughout the transfer process (i.e., not evaporate or condense). In other embodiments, evaporative cooling processes may utilize heat transfer compositions as well.

A heat sink may be defined as any space, location, object or body capable of absorbing heat. A vapor compression refrigeration system is one example of such a heat sink.

A body to be cooled may be any space location or object (the space location or object may be open or enclosed), requiring refrigeration or cooling. In stationary applications the body may be the interior of a structure, such as a residential or commercial structure requiring air-conditioning, industrial water chillers, or a storage location such as refrigerator or freezer cases in a supermarket, transport refrigerated containers other storage locations for perishables, such as food or pharmaceuticals. In mobile applications, the body may be incorporated into a transportation unit for the road, rail, sea or air, such as the passenger compartment of an automobile requiring air conditioning.

Certain refrigeration systems operate independently with regards to any moving carrier, these are known as "intermodal" systems. Such intermodal systems include "containers" (combined sea/land transport) as well as "swap bodies" (combined road and rail transport).

A body to be heated may be any space, location or object requiring heat. These may be the interior of structures either residential or commercial structures requiring heating, in a similar manner to the body to be cooled. Additionally, mobile units as described for cooling may be similar to those requiring heating. Certain transport units require heating to prevent the material being transported from solidifying inside the transport container.

A heat transfer system is a system (or apparatus) used to produce a heating or cooling effect in a particular space. A heat transfer system may be a mobile system or a stationary system. According to the disclosure herein, there is provided a heat transfer system comprising a composition comprising 2,3,3,3-tetrafluoropropene, a terpene inhibitor and one or more oxidation products, wherein the oxidation product is an oxidation product of a terpene inhibitor. In one embodiment, the heat transfer system is a stationary system chosen from a refrigeration, air-conditioning or heat pump apparatus. In one embodiment, the heat transfer system is a mobile system which is a mobile air-conditioning system.

A refrigerant is defined herein as a heat transfer fluid which undergoes a phase change from liquid to gas and back again during a cycle used to transfer of heat. There is provided herein a refrigerant comprising 2,3,3,3-tetrafluoropropene, a terpene inhibitor and one or more oxidation products, wherein the oxidation product is an oxidation product of a terpene inhibitor. In one embodiment, the refrigerant further comprises a lubricant. In one embodiment, the refrigerant comprises one or more added refrigerants (as defined hereinbelow).

The present disclosure further relates to a method for producing heating comprising evaporating a refrigerant comprising 2,3,3,3-tetrafluoropropene, a terpene inhibitor and one or more oxidation products, wherein the oxidation product is an oxidation product of a terpene inhibitor, and thereafter condensing said composition in the vicinity of a body to be heated. In one embodiment of this method, the refrigerant further comprises a lubricant.

The present disclosure further provides a method for producing cooling comprising condensing a refrigerant comprising 2,3,3,3-tetrafluoropropene, a terpene inhibitor and one or more oxidation products, wherein the oxidation product is an oxidation product of a terpene inhibitor, and thereafter evaporating said composition in the vicinity of a body to be cooled. In one embodiment of this method, the refrigerant further comprises a lubricant.

The present disclosure further provides a method for producing heating or cooling in a refrigeration, air-conditioning, or heat pump apparatus, said method comprising introducing a refrigerant into said apparatus having (a) a centrifugal compressor; (b) a multi-stage centrifugal compressor, or (c) a single slab/single pass heat exchanger; wherein said refrigerant or heat transfer fluid composition comprises a composition comprising 2,3,3,3-tetrafluoropropene, a terpene inhibitor and one or more oxidation products, wherein the oxidation product is an oxidation product of a terpene inhibitor. In one embodiment of this method, the refrigerant further comprises a lubricant.

### Lubricant

The lubricant component of the refrigerant compositions can comprise those suitable for use with refrigeration or air-conditioning apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21, herein incorporated by reference. These include mineral oils and synthetic oils.

Mineral oils comprise paraffins (i.e. straight-chain and branched-carbon-chain, saturated hydrocarbons), naphthenes (i.e. cyclic or ring structure saturated hydrocarbons, which may be paraffins) and aromatics (i.e. unsaturated, cyclic hydrocarbons containing one or more rings characterized by alternating double bonds).

Synthetic oils comprise alkylaryls (i.e. linear and branched alkyl alkylbenzenes), synthetic paraffins and naphthenes, silicones, and poly-alpha-olefins.

The lubricant component may comprise those which have been designed for use with hydrofluorocarbon refrigerants and are miscible with compositions disclosed herein under compression refrigeration and air-conditioning apparatus' operating conditions. Such lubricants and their properties are discussed in "Synthetic Lubricants and High-Performance Fluids", R. L. Shubkin, editor, Marcel Dekker, 1993. Such lubricants include, but are not limited to, polyol esters (POEs) such as Castrol^{®} 100 (Castrol, United Kingdom), polyalkylene glycols (PAGs) such as RL-488A from Dow (Dow Chemical, Midland, Michigan), and polyvinyl ethers (PVEs).

Lubricants for applications disclosed herein are selected by considering a given compressor's requirements and the environment to which the lubricant will be exposed. In one particular embodiment, the foregoing refrigerant compositions are combined with a PAG lubricant for usage in an automotive A/C system having an internal combustion engine. In another particular embodiment, the foregoing refrigerant compositions are combined with a POE lubricant for usage in an automotive A/C system having an electric or hybrid electric drive train.

### Added Refrigerants

In other embodiments, a refrigerant composition comprises 2,3,3,3-tetrafluoropropene, a terpene inhibitor and one or more oxidation products, wherein the oxidation product is an oxidation product of a terpene inhibitor and one or more added refrigerants. In one embodiment an added refrigerant comprises a hydrofluorocarbon. Examples of suitable hydrofluorocarbons include difluoromethane (HFC-32), pentafluoroethane (HFC-125), 1,1,1,2-tetrafluoroethane (HFC-134a), 1,1-difluoroethane (HFC-152a), 1,1,1,3,3,3-hexafluoropropane (HFC-236fa) and 1,1,1,2,2,3,3,3-heptafluoropropane (HFC-227ea). The refrigerant composition may comprise 2,3,3,3-tetrafluoropropene, a terpene inhibitor, one or more oxidation products, wherein the oxidation product is an oxidation product of a terpene inhibitor, one or more added refrigerants, and a lubricant.

In one particular embodiment, the added refrigerant comprises HFO-1234ze. In another embodiment, the added refrigerant comprises carbon dioxide.

The amount of added refrigerant can range from 10 to 90 wt%, 25 to 75 wt%, 30 to 60 wt% or 30 to 50 wt%.

### Refrigerant Additives

Additives which can improve the refrigerant and A/C lifetime and compressor durability are desirable. In one aspect of the invention, the inventive refrigerant composition is used to introduce lubricant into the A/C system as well as other additives, such as a) acid scavengers and b) flame suppressants.

### Acid Scavenger

An acid scavenger may comprise a siloxane, an activated aromatic compound, or a combination of both. Serrano et al. (paragraph 38 of US 2011/0272624 A1) disclose that the siloxane may be any molecule having a siloxy functionality. The siloxane may include an alkyl siloxane, an aryl siloxane, or a siloxane containing mixtures of aryl and alkyl substituents. For example, the siloxane may be an alkyl siloxane, including a dialkylsiloxane or a polydialkylsiloxane. Preferred siloxanes include an oxygen atom bonded to two silicon atoms, i.e., a group having the structure: SiOSi. Preferred siloxanes include siloxanes of having one or more of methyl, ethyl, propyl, or butyl groups.

In one aspect of the invention, the siloxane is an alkylsiloxane containing from about 1 to about 12 carbon atoms, such as hexamethyldisiloxane. The siloxane may also be a polymer such as polydialkylsiloxane, where the alkyl group is a methyl, ethyl, propyl, butyl, or any combination thereof. Suitable polydialkylsiloxanes have a molecular weight from about 100 to about 10,000. Highly preferred siloxanes include hexamethyldisiloxane, polydimethylsiloxane, and combinations thereof. The siloxane may consist essentially of polydimethylsiloxane, hexamethyldisiloxane, or a combination thereof.

The activated aromatic compound may be any aromatic molecule activated towards a Friedel-Crafts addition reaction, or mixtures thereof. An aromatic molecule activated towards a Friedel-Crafts addition reaction is defined to be any aromatic molecule capable of an addition reaction with mineral acids. Especially aromatic molecules capable of addition reactions with mineral acids either in the application environment (AC system) or during the ASHRAE 97: 2007 "Sealed Glass Tube Method to Test the Chemical Stability of Materials for Use within Refrigerant Systems" thermal stability test.

The acid scavenger (e.g., the activated aromatic compound, the siloxane, or both) may be present in any concentration that results in a relatively low total acid number, a relatively low total halides concentration, a relatively low total organic acid concentration, or any combination thereof. Preferably the acid scavenger is present at a concentration greater than about 0.0050 wt%, more preferably greater than about 0.05 wt% and even more preferably greater than about 0.1 wt% (e.g. greater than about 0.5 wt%) based on the total weight of the refrigerant composition. The acid scavenger preferably is present in a concentration less than about 3 wt%, more preferably less than about 2.5 wt% and most preferably greater than about 2 wt% (e. g. less than about 1.8 wt%) based on the total Weight of the refrigerant composition.

### Flame Suppressants

Preferred flame suppressants include those described in patent application "Refrigerant compositions containing fluorine substituted olefins CA 2557873 A1" and incorporated by reference along with fluorinated products such as HFC-125 and/or Krytox^{®} lubricants, also incorporated by reference and described in patent application "Refrigerant compositions comprising fluoroolefins and uses thereof WO2009018117A1."

### Preparation of Refrigerant Composition

The refrigerant compositions of the present invention may be prepared by any convenient method to combine the desired amount of the individual components. A preferred method is to weigh the desired component amounts and thereafter combine the components in an appropriate vessel. Agitation may be used, if desired.

### Selected Embodiments

1. In one embodiment, there is provided a composition comprising 2,3,3,3-tetrafluoropropene, a terpene inhibitor and one or more oxidation products, wherein the oxidation product is an oxidation product of a terpene inhibitor.
2. In one embodiment, there is provided a composition comprising 2,3,3,3-tetrafluoropropene, a terpene inhibitor which is limonene, and one or more oxidation products, wherein the oxidation product comprises one or more of carvone, carveol (Z- and E-) and limonene oxide (Z- and E-).
3. In one embodiment, there is provided a composition comprising 2,3,3,3-tetrafluoropropene, a terpene inhibitor which is limonene, and one or more oxidation products, wherein the oxidation product comprises carvone.
4. In one embodiment, there is provided a composition comprising 2,3,3,3-tetrafluoropropene, a terpene inhibitor which is limonene, and one or more oxidation products, wherein the oxidation product comprises carveol (Z- and E-).
5. In one embodiment, there is provided a composition comprising 2,3,3,3-tetrafluoropropene, a terpene inhibitor which is limonene, and one or more oxidation products, wherein the oxidation product comprises limonene oxide (*Z*- and *E*-).
6. In one embodiment, there is provided a composition comprising 2,3,3,3-tetrafluoropropene, a terpene inhibitor which is α-terpinene, and one or more oxidation products, wherein the oxidation product comprises one or more of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p*-cymene, and propane.
7. In one embodiment, there is provided a composition comprising 2,3,3,3-tetrafluoropropene, a terpene inhibitor which is α-terpinene, and one or more oxidation products, wherein the oxidation product comprises 3-isopropyl-6-methyl-7-oxabicyclo[4.1.0]hept-2-ene.
8. In one embodiment, there is provided a composition comprising 2,3,3,3-tetrafluoropropene, a terpene inhibitor which is α-terpinene, and one or more oxidation products, wherein the oxidation product comprises 6-isopropyl-3-methyl-7oxabicyclo[4.1.0]hept-2-ene.
9. In one embodiment, there is provided a composition comprising 2,3,3,3-tetrafluoropropene, a terpene inhibitor which is α-terpinene, and one or more oxidation products, wherein the oxidation product comprises 1-isopropyl-4-methyl-cyclohex-2-ene-1,4-diol.
10. In one embodiment, there is provided a composition comprising 2,3,3,3-tetrafluoropropene, a terpene inhibitor which is α-terpinene, and one or more oxidation products, wherein the oxidation product comprises *E*-3-isopropyl-6-methylhepta-2,6-dienal.
11. In one embodiment, there is provided a composition comprising 2,3,3,3-tetrafluoropropene, a terpene inhibitor which is α-terpinene, and one or more oxidation products, wherein the oxidation product comprises p-cymene.
12. In one embodiment, there is provided a composition comprising 2,3,3,3-tetrafluoropropene, a terpene inhibitor which is α-terpinene, and one or more oxidation products, wherein the oxidation product comprises propane.
13. In one embodiment, there is provided a composition comprising 2,3,3,3-tetrafluoropropene, a terpene inhibitor which is α-pinene, and one or more oxidation products, wherein the oxidation product comprises α-pinene oxide.
14. In one embodiment, there is provided a composition comprising 2,3,3,3-tetrafluoropropene, a terpene inhibitor which is β-pinene, and one or more oxidation products, wherein the oxidation product comprises one or more of pinocarveol and myrtenol.
15. In one embodiment, there is provided a composition comprising 2,3,3,3-tetrafluoropropene, a terpene inhibitor which is β-pinene, and one or more oxidation products, wherein the oxidation product comprises pinocarveol.
16. In one embodiment, there is provided a composition comprising 2,3,3,3-tetrafluoropropene, a terpene inhibitor which is β-pinene, and one or more oxidation products, wherein the oxidation product comprises myrtenol.
17. In one embodiment, there is provided a refrigerant comprising the composition recited in embodiment 3 and a lubricant.
18. In one embodiment, there is provided a refrigerant comprising the composition recited in embodiment 4 and a lubricant.
19. In one embodiment, there is provided a refrigerant comprising the composition recited in embodiment 5 and a lubricant.
20. In one embodiment, there is provided a refrigerant comprising the composition recited in embodiment 7 and a lubricant.
21. In one embodiment, there is provided a refrigerant comprising the composition recited in embodiment 8 and a lubricant.
22. In one embodiment, there is provided a refrigerant comprising the composition recited in embodiment 9 and a lubricant.
23. In one embodiment, there is provided a refrigerant comprising the composition recited in embodiment 10 and a lubricant.
24. In one embodiment, there is provided a refrigerant comprising the composition recited in embodiment 11 and a lubricant.
25. In one embodiment, there is provided a refrigerant comprising the composition recited in embodiment 12 and a lubricant.
26. In one embodiment, there is provided a refrigerant comprising the composition recited in embodiment 13 and a lubricant.
27. In one embodiment, there is provided a refrigerant comprising the composition recited in embodiment 15 and lubricant.
28. In one embodiment, there is provided a refrigerant comprising the composition recited in embodiment 16 and a lubricant.
29. In one embodiment, there is provided a process for heat transfer comprising transporting a composition of any of embodiment 3, 4, 5, 7, 8, 9, 10, 11, 12, 13, 15 or 16 from a heat source to a heat sink.
30. In one embodiment, there is provided a method for producing cooling comprising condensing a refrigerant of any of embodiment 17, 18, 19, 20, 21, 22, 23, 24, 25, 26, 27 or 28, and thereafter evaporating said refrigerant in the vicinity of a body to be cooled.
31. In one embodiment, there is provided a method for producing heating comprising evaporating a refrigerant of any of embodiment 17, 18, 19, 20, 21, 22, 23, 24, 25, 26, 27 or 28, and thereafter condensing said refrigerant in the vicinity of a body to be heated.
32. In one embodiment, there is provided a method for producing heating or cooling in a refrigeration, air-conditioning, or heat pump apparatus, said method comprising introducing a refrigerant into said apparatus having (a) a centrifugal compressor; (b) a multi-stage centrifugal compressor, or (c) a single slab/single pass heat exchanger; wherein said refrigerant is the refrigerant of any of embodiment 17, 18, 19, 20, 21, 22, 23, 24, 25, 26, 27 or 28.
33. In one embodiment, there is provided a composition of any of the embodiments of 1-16 further comprising an additional compound chosen from at least one of HCC-40, CFC-12, HFC-23, HFC-134a, HFC-143a, HFC-152a, , HCFC-225ca, HCFC-225cb, HCFC-244bb, HFC-245cb, HFC-254eb, HFC-263fb, HFO-1123, HFO-1243zf, HFO-1225ye (E- and/or Z-isomer), HFO-1225zc, HFO-1234ze (E- and/or Z-isomer), 3,3,3-trifluoro-1-propyne, HCFO-1233xf, HCFO-1122, HCO-1140, HCFO-1131 (E- and/or Z-isomer), HCFO-1131a, HCFC-124, HCFC-124a, and HCFC-142b.
34. In one embodiment, there is provided a composition of any of the embodiments of 1-16 further comprising an additional compound chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid.
35. In one embodiment, there is provided a composition of any of the embodiments of 1-16 further comprising an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.
36. In one embodiment, there is provided a composition of any of the embodiments of 17-28 further comprising an additional compound chosen from at least one of HCC-40, CFC-12, HFC-23, HFC-134a, HFC-143a, HFC-152a, , HCFC-225ca, HCFC-225cb, HCFC-244bb, HFC-245cb, HFC-254eb, HFC-263fb, HFO-1123, HFO-1243zf, HFO-1225ye (*E*- and/or *Z*-isomer), HFO-1225zc, HFO-1234ze (*E*- and/or *Z*-isomer), 3,3,3-trifluoro-1-propyne, HCFO-1233xf, HCFO-1122, HCO-1140, HCFO-1131 (*E*- and/or *Z*-isomer), HCFO-1131a, HCFC-124, HCFC-124a, and HCFC-142b.
37. In one embodiment, there is provided a composition of any of the embodiments of 17-28 further comprising an additional compound chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid.
38. In one embodiment, there is provided a composition of any of the embodiments of 17-28 further comprising an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.

### EXAMPLES

### Example 1

A sample of 60 g of 2,3,3,3-tetrafluoropropene having purity of 99.5 wt% containing HFO-1243zf, HFO-1234ze(E), and HFC-152a and was added to a 500 mL cylinder containing 200 ppm (terpene inhibitor) and 12,000 ppm air. The cylinder was left at room temperature, which varied from about -5°C to about 35°C for six months. The product in the cylinder was tested and found to be polymer-free, with a composition further comprising limonene and its oxidation products, as determined by gas chromatography (below 200 ppm).
The following represent preferred items of the present invention:
1. A composition comprising 2,3,3,3-tetrafluoropropene, a terpene inhibitor and one or more oxidation products, wherein the oxidation product is an oxidation product of a terpene inhibitor.
2. The composition of item 1 wherein the terpene inhibitor may be chosen from one or more of limonene, α-terpinene, α-pinene and β-pinene.
3. The composition of item 1 or 2 wherein the oxidation product is chosen from one or more of carvone, carveol, 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p*-cymene, pinocarveol, myrtenol, and propane.
4. The composition of item 1 or 2 wherein the inhibitor is limonene, and the oxidation product may be at least one of carvone, carveol and limonene oxide.
5. The composition of item 1 or 2 wherein the inhibitor is α-terpinene, and the oxidation product may be at least one of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p*-cymene and propane.
6. The composition of item 1 or 2 wherein the inhibitor is α-pinene and the oxidation product is α-pinene oxide.
7. The composition of item 1 or 2 wherein the inhibitor is β-pinene and the oxidation product is at least one of pinocarveol and myrtenol.
8. The composition of any one of items 1-7, wherein the composition further comprises an additional compound chosen from at least one of HCC-40, CFC-12, HFC-23, HFC-134a, HFC-143a, HFC-152a, , HCFC-225ca, HCFC-225cb, HCFC-244bb, HFC-245cb, HFC-254eb, HFC-263fb, HFO-1123, HFO-1243zf, HFO-1225ye (*E*- and/or *Z*-isomer), HFO-1225zc, HFO-1234ze (*E*- and/or *Z*-isomer), 3,3,3-trifluoro-1-propyne, HCFO-1233xf, HCFO-1122, HCO-1140, HCFO-1131 (*E*- and/or *Z*-isomer), HCFO-1131a, HCFC-124, HCFC-124a, and HCFC-142b.
9. The composition of any one of items 1-8, wherein the composition further comprises an additional compound chosen from at least one of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid.
10. The composition of any one of items 1-9, wherein the composition further comprises an additional compound chosen from at least one of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.
11. The composition of any one of items 1-6, wherein the composition further comprises an additional compound chosen from HFC-134a, HFC-244bb, HFC-245cb, HFO-1243zf, HFO-1225ye, HFO-1225zc, HFO-1234ze, 3,3,3-trifluoro-1-propyne, and HCFO-1233xf.
12. The composition of any one of items 1-11, wherein the terpene inhibitor is present in the composition in an amount of at least 0.001 % by weight (10 ppm).
13. The composition of any one of items 1-11, wherein the terpene inhibitor is present in the composition in an amount of at least 0.01 % by weight (100 ppm).
14. The composition of item 1 wherein the composition further comprises an additional compound chosen from one or more of HFO-1243zf, HFC-134a, HFC-143a, HCFO-1122, HFC-254eb, HCFC-124 and HFC-23.
15. The composition of item 14 wherein the additional compound is a combination of HFO-1243zf, HFC-134a and HFC-143a.
16. The composition of item 14 wherein the additional compound is a combination of HFO-1243zf, HFC-134a, HFC-143a, HCFO-1122 and HFC-254eb.
17. The composition of item 1 wherein the composition further comprises an additional compound chosen from one or more of HFC-152a, HFO-1234ze(E), HCFO-1131a, HCO-1140, CFC-12, HFC-244bb and HCFO-1233xf.
18. The composition of item 1 wherein the composition further comprises an additional compound chosen from one or more of HFO-1225ye(Z), HC-40, HFO-1123 and HFC-263fb.
19. The composition of item 7 wherein the total amount of additional compound may be greater than 0 wt% and less than 1 wt%.
20. The composition of item 7 wherein the total amount of additional compounds present is greater than 0.1 ppm and less than 0.5 wt% of the total weight of the composition.
21. The composition of any of items 1-17 wherein the composition further comprises an additional inhibitor chosen from α-tocopherol, butylated hydroxytoluene, 4-methoxyphenol, and benzene-1,4-diol.
22. The composition of item 1 wherein the terpene inhibitor comprises limonene.
23. The composition of item 1 wherein the terpene inhibitor comprises α-terpinene.
24. The composition of item 1 wherein the terpene inhibitor comprises α-pinene.
25. The composition of item 1 wherein the terpene inhibitor comprises β-pinene.
26. A refrigerant composition comprising the composition of item 1 and a lubricant.
27. The refrigerant composition of item 26 further comprising an added refrigerant.
28. The refrigerant of item 27 wherein the added refrigerant is a hydrofluorocarbon.
29. The refrigerant composition of item 28 wherein the hydrofluorocarbon is chosen from HFC-32, HFC-125, HFC-134a, HFC-152a, 236fa and HFC-227ea.
30. The refrigerant of item 28 wherein the added refrigerant is HFO-1234ze.
31. The refrigerant of item 27 wherein the added refrigerant is carbon dioxide.
32. A process for heat transfer comprising transporting a composition comprising the composition of item 1 from a heat source to a heat sink.
33. A method for producing cooling comprising condensing a refrigerant, and thereafter evaporating said composition in the vicinity of a body to be cooled, wherein the refrigerant is the refrigerant composition of any of items 26, 27, 28, 29, 30 or 31.
34. A method for producing heating comprising evaporating a refrigerant, and thereafter condensing said composition in the vicinity of a body to be heated, wherein the refrigerant is the refrigerant composition of any of items 26, 27, 28, 29, 30 or 31.
35. A method for producing heating or cooling in a refrigeration, air-conditioning, or heat pump apparatus, said method comprising introducing a refrigerant into said apparatus having (a) a centrifugal compressor; (b) a multi-stage centrifugal compressor, or (c) a single slab/single pass heat exchanger; wherein said refrigerant is the refrigerant composition of any of items 26, 27, 28, 29, 30 or 31.
36. A heat transfer system comprising a composition comprising 2,3,3,3-tetrafluoropropene, a terpene inhibitor and one or more oxidation products, wherein the oxidation product is an oxidation product of a terpene inhibitor.
37. The system of item 36 wherein the heat transfer system is a stationary system chosen from a refrigeration, air-conditioning or heat pump apparatus.
38. The heat transfer system of item 36, wherein the heat transfer system is a mobile system which is a mobile air-conditioning system.

## Claims

1. A composition comprising 2,3,3,3-tetrafluoropropene, a terpene inhibitor and one or more oxidation products,
wherein the terpene inhibitor is selected from one or more of limonene, α-terpinene, α-pinene and β-pinene,
wherein the oxidation product is an oxidation product of the terpene inhibitor,
wherein when the terpene inhibitor is limonene, the composition further comprises one or more of carvone, carveol (*Z*- and *E*-) and limonene oxide (*Z*- and *E*-), and one or more components selected from the group consisting of α-terpinene, cymene, 1-octanol, γ-terpinene, terpinolene, and β-terpinene,
wherein when the terpene inhibitor is α-terpinene, the composition further comprises one or more of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p*-cymene, and propane, and one or more components selected from the group consisting of camphene, isocamphene, terpinolene, menthomenthene, phellandrene, sabinene, β-terpinene, 1,4-cineole, carvomenthene oxide, *d*-limonene, 1,8-cineol, γ-terpinene,
wherein when the terpene inhibitor is α-pinene, the composition further comprises α-pinene oxide and one or more components selected from the group consisting of 5-methyl-4-nonene, α-thujene, tricyclene (1,7,7-trimethyltricyclo[2.2.1.02,6]heptane), α-fenchene, camphene, cymene, *d*-limonene, α-campholenal, and/or
wherein when the terpene inhibitor is β-pinene, the composition further comprises one or more of pinocarveol and myrtenol, and one or more components selected from the group consisting of α-pinene, α-fenchene, camphene, verbenene, myrcene, phellandrene, camphane, cymene and 2-menthene.

2. The composition of claim 1, wherein when the terpene inhibitor is limonene, the oxidation product is one or more of carvone, carveol (*Z*- and *E*-) and limonene oxide (*Z*- and *E*-).

3. The composition of any of claims 1 to 2, wherein the composition comprises cymene.

4. The composition of claim 1, wherein when the terpene inhibitor is α-terpinene, the oxidation product is one or more of 3-isopropyl-6-methyl-7-oxabicyclo[4.1.0]hept-2-ene, 6-isopropyl-3-methyl-7oxabicyclo[4.1.0]hept-2-ene, 1-isopropyl-4-methyl-cyclohex-2-ene-1,4-diol, *E*-3-isopropyl-6-methylhepta-2,6-dienal, *p*-cymene and propane.

5. The composition of claim 1, wherein when the terpene inhibitor is α-pinene, the oxidation product is α-pinene oxide.

6. The composition of claim 1, wherein when the terpene inhibitor is β-pinene, the oxidation product is one or more of pinocarveol and myrtenol.

7. The composition of any of claims 1 to 6, wherein the oxidation product is present in an amount of 1 to 500 ppm based on a total weight of the composition, preferably in an amount of 10 to 500 ppm.

8. The composition of any of claims 1 to 7, wherein the composition further comprises at least one additional compound selected from the group consisting of HCC-40, CFC-12, HFC-23, HFC-134a, HFC-143a, HFC-152a, HCFC-225ca, HCFC-225cb, HCFC-244bb, HFC-245cb, HFC-254eb, HFC-263fb, HFO-1123, HFO-1243zf, HFO-1225ye (E- and/or Z-isomer), HFO-1225zc, HFO-1234ze (E- and/or Z-isomer), 3,3,3-trifluoro-1-propyne, HCFO-1233xf, HCFO-1122, HCO-1140, HCFO-1131 (E- and/or Z-isomer), HCFO-1131a, HCFC-124, HCFC-124a, and HCFC-142b.

9. The composition of any of claims 1 to 8,
wherein the at least one additional compound is selected from the group consisting of HFO-1243zf, HFC-134a, HFC-143a, HCFO-1122, HFC-254eb, HCFC-124 and HFC-23, preferably wherein the at least one additional compound is (i) a combination of HFO-1243zf, HFC-134a and HFC-143a, or (ii) a combination of HFO-1243zf, HFC-134a, HFC-143a, HCFO-1122 and HFC-254eb; and/or
wherein the at least one additional compound is selected from the group consisting of HFC-152a, HFO-1234ze(E), HCFO-1131a, HCO-1140, CFC-12, HFC-244bb and HCFO-1233xf; and/or
wherein the at least one additional compound is selected from the group consisting of HFO-1225ye(Z), HCC-40, HFO-1123 and HFC-263fb.

10. The composition of any one of claims 1 to 9,
wherein the composition further comprises at least one additional compound selected from the group consisting of CHF(CF₃)CH₂CH=CF(CF₃), CHF(CF₃)CH=CHCHF(CF₃), CF(CF₃)=CHCH₂CF(CF₃)CH₂CHF(CF₃), CF₃C(=O)CH₃, formaldehyde, acetaldehyde, trioxane and trifluoroacetic acid; and/or
wherein the composition further comprises at least one additional compound selected from the group consisting of Z-HFO-1336mzz, E-HFO-1336mzz, HFO-1327mz, HCFO-1122, HCFO-1122a, HFO-1123, E-HFO-1233zd, Z-HFO-1224yd, E-HFO-1132, Z-HFO-1132, HFO-1132a, HCFO-1112, HFO-1234zc, HFO-1234ye, and HFO-1234yc.

11. The composition of any one of claims 1 to 10, wherein the terpene inhibitor is present in the composition in an amount of at least 0.001 % by weight (10 ppm), preferably in an amount of 0.001 % by weight to 10 % by weight, or wherein the terpene inhibitor is present in the composition in an amount of at least 0.01 % by weight (100 ppm), preferably in an amount of 0.01 % by weight to 5 % by weight, based on a total weight of the composition.

12. The composition of any one of claims 1 to 11, wherein the total amount of additional compound is greater than 0 wt% and less than 1 wt%, preferably greater than 0.1 ppm and less than 0.5 wt% of the total weight of the composition.

13. The composition of any one of claims 1 to 12, wherein the composition further comprises an additional inhibitor selected from the group consisting of α-tocopherol, butylated hydroxytoluene, 4-methoxyphenol, and benzene-1,4-diol.

14. A refrigerant composition comprising the composition of any one of claims 1 to 13 and a lubricant.

15. The refrigerant composition of claim 14, further comprising an added refrigerant, more preferably an added refrigerant which is a hydrofluorocarbon, most preferably an added refrigerant which is a hydrofluorocarbon selected from the group consisting of HFO-1234ze, carbon dioxide, HFC-32, HFC-125, HFC-134a, HFC-152a, 236fa and HFC-227ea.
